# FASCICULE DE BREVET EUROPEEN

(11) **EP 4 399 757 B1**
(45) Date de publication et mention de la délivrance du brevet: **16.04.2025**
(21) Numéro de dépôt: 22769242.3
(22) Date de dépôt: 26.08.2022
(51) Int. Cl.: H01M 8/241, H01M 8/247, H01M 8/0276, H01M 8/2485, H01M 8/10

(54) **PILE À COMBUSTIBLE**
BRENNSTOFFZELLE
FUEL CELL

(30) Priorité: 06.09.2021 FR 2109327
(43) Date de publication de la demande: 17.07.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ANDRE, Johan, 38360 Sassenage (FR); SIRAC, Denis, 38360 Sassenage (FR)
(74) Mandataire: Air Liquide
(86) Numéro de dépôt international: PCT/EP2022/073751
(87) Numéro de publication internationale: WO 2023/031028

(56) Documents cités:
- US-A1- 2005 095 485
- US-B1- 6 372 372

## Description

La présente invention concerne une pile à combustible, notamment du type à membrane échangeuse de protons (« PEMFC »), comprenant un empilement de cellules élémentaires, les cellules comprenant chacune une plaque anodique et une plaque cathodique prenant en sandwich un Assemblage Membrane Electrodes (AME).

L'empilement d'une telle pile est pris en sandwich entre deux plaques de serrage pour appliquer une pression de serrage déterminée sur l'empilement, au moins une extrémité de l'empilement comprenant une plaque collectrice de courant conductrice de l'électricité reliée électriquement aux cellules de l'empilement pour collecter la somme des courants électriques produits par les cellules.

Une telle compression de l'empilement de cellules est souvent défavorable non seulement à la performance des piles, mais aussi leur durée de vie. En effet, une zone insuffisamment comprimée présente une résistance de contact électrique augmentée par rapport à une zone plus comprimée. Une zone insuffisamment comprimée a donc un fonctionnement dégradé par des pertes ohmiques supérieures. Inversement, une zone de cellule qui est relativement trop comprimée subit une dégradation mécanique accélérée.

Par ailleurs, au moins l'une des extrémités de l'empilement comporte une tuyauterie pour la circulation des fluides réactif (air ou hydrogène) et pour la circulation du fluide (souvent un liquide) de refroidissement.

Ainsi, il est important d'étancher correctement au moins l'interface située au niveau de l'extrémité de l'empilement comportant la tuyauterie pour la circulation des fluides, notamment entre la plaque de serrage et la plaque collectrice de courant électrique.

Les solutions connues utilisent souvent une pluralité de joints toriques disposés de part et d'autres de la plaque collectrice de courant électrique. Ce type de solution est complexe à mettre en œuvre et il reste un fort risques de fuites, liés à la compression de l'empilement au niveau zones de passage des différents fluides. US 6372372B1 et US 2005/095485A1 peuvent être cités comme l'art antérieur représentatif.

La présente invention vise à remédier efficacement à ces inconvénients en proposant une pile à combustible, comportant un empilement d'une pluralité de cellules, l'empilement étant pris en sandwich entre une première plaque de serrage et une deuxième plaque de serrage, pour appliquer une pression de serrage prédéterminée sur l'empilement, la pluralité de cellules comportant une première cellule à une première extrémité de l'empilement et une dernière cellule à une deuxième extrémité de l'empilement, chaque cellule de la pluralité comportant une plaque anodique et une plaque cathodique, l'une des plaques de la première cellule formant avec l'une des plaques d'une autre des cellules, un premier circuit intercellulaire de refroidissement, l'autre des plaques de la première cellule définissant une première plaque d'extrémité, l'une des plaques de la dernière cellule formant avec l'une des plaques d'une autre des cellules, un dernier circuit intercellulaire de refroidissement, l'autre des plaques de la dernière cellule définissant une dernière plaque d'extrémité, la pile comportant une plaque de distribution comprenant une première face de collecte de courant électrique destinée à faire face à une première plaque collectrice de courant électrique et une face de distribution destinée à faire face à la face de refroidissement de la première plaque d'extrémité, la pile comportant un premier joint plat interposé entre la plaque de distribution et la première plaque de serrage, la plaque de distribution comportant au moins un collecteur de distribution d'un fluide formé au travers de la plaque, la première face de collecte de courant électrique et/ou la première plaque de serrage comportant une lèvre annulaire ménagée autour du collecteur de distribution, de sorte à pincer le premier joint plat pour assurer une étanchéité vis-à-vis du fluide.

Une telle configuration permet d'assurer une étanchéité correcte vis-à-vis du fluide, le joint plat étant pincé localement au niveau du collecteur de distribution.

Selon une réalisation, la pile à combustible est une pile à combustible à membrane échangeuse de protons.

Selon une réalisation, la plaque anodique et la plaque cathodique de chaque cellule, prennent en sandwich un Assemblage Membrane Electrodes.

Selon une réalisation, la plaque de distribution est fixée à la première plaque d'extrémité, notamment par soudure.

En variante, la plaque de distribution et la première plaque d'extrémité forment une unique pièce fabriquée par moulage, et/ou usinage et/ou hydroformage et/ou emboutissage et/ou par impression en trois dimensions.

Une telle fixation permet d'assurer une meilleure étanchéité vis-à-vis du fluide.

Selon une réalisation, le collecteur de distribution est agencé de sorte que la totalité du fluide entrant dans le collecteur de distribution, traverse la plaque de distribution dans son épaisseur pour distribuer le fluide dans la première cellule.

Selon une réalisation, la plaque de distribution comporte six collecteurs de distribution, notamment pour distribuer ou collecter un carburant, un comburant et un fluide de refroidissement.

Selon une réalisation, la lèvre annulaire est ménagée sur tout le pourtour du collecteur de distribution.

Selon une réalisation, la lèvre annulaire fait saillie par rapport au plan de la plaque.

Selon une réalisation, la lèvre annulaire est issue de matière de la première plaque de serrage.

En variante, la lèvre annulaire est issue de matière de la plaque de distribution.

Selon une réalisation, l'une de la première face de collecte de courant électrique et de la première plaque de serrage comporte une lèvre annulaire ménagée autour du collecteur de distribution et l'autre de la première face de collecte de courant électrique et de la première plaque de serrage comporte une gorge annulaire, de sorte à pincer le premier joint plat pour assurer une étanchéité vis-à-vis du fluide.

Selon une réalisation, la gorge annulaire et la lèvre annulaire sont agencées de sorte que la lèvre est en vis-à-vis de la gorge en l'absence du joint plat.

Cet agencement permet de pincer le joint plat en formant deux plis sur ce dernier.

Selon une réalisation, le premier joint plat a, au repos, une épaisseur sensiblement constante sur toute sa surface.

Selon une réalisation, le premier joint plat est dépourvu de bossage.

Selon une réalisation, le premier joint plat a une face plane dont la surface est au moins égale à 80% de la surface de la face de la première plaque d'extrémité en vis-à-vis du premier joint plat.

Selon une réalisation, le premier joint plat a une face plane dont la surface est au moins égale à 80% de la surface de la face de la première plaque de serrage.

Selon une réalisation, le premier joint plat est électriquement isolant.

Selon une réalisation, le premier joint plat comporte un matériau à base de silicone, d'élastomère ou d'éthylène-propylène-diène monomère (EPDM).

Selon une réalisation, le premier joint plat est en contact avec au moins une portion de la première plaque collectrice et est en contact avec au moins une portion de la plaque de distribution.

Selon une réalisation, la pile est dépourvue de joint torique disposé de part et d'autre du premier joint plat, pour assurer l'étanchéité vis-à-vis du fluide.

Selon une réalisation, la première face de collecte de courant électrique comporte un premier embossage pour recevoir la première plaque collectrice, de sorte que la plaque de distribution et la première plaque collectrice forment ensemble une face plane pour venir en contact avec le premier joint plat.

Selon une réalisation, le premier joint plat comporte au moins un orifice pour le passage du fluide entre la première plaque de serrage et la plaque de distribution.

Selon une réalisation, la première plaque collectrice comporte une languette faisant saillie par rapport au plan de la première plaque collectrice et le premier joint plat comporte une fente pour le passage de la languette à travers le premier joint plat.

Selon une réalisation, la fente est distincte de l'orifice.

Selon une réalisation, la pile comporte au moins un tirant pour appliquer la pression de serrage sur l'empilement.

Selon une réalisation, le premier joint plat comporte au moins un trou traversant pour le passage du tirant.

Selon une réalisation, la première plaque collectrice est reliée électriquement à la plaque de distribution.

Selon une réalisation, chaque plaque anodique ou cathodique comprend une face réactive et une face de refroidissement opposées l'une par rapport à l'autre, la face réactive de chaque plaque étant destinée à faire face à l'Assemblage Membrane Electrodes et étant munie de reliefs et de creux formant un circuit de réactif, pour la circulation d'un fluide réactif, la face de refroidissement de la plaque cathodique d'au moins une des cellules étant destinée à faire face à la face de refroidissement de la plaque anodique d'une autre des cellules, en définissant entre elles des reliefs et des creux pour former un circuit intercellulaire de refroidissement pour la circulation d'un fluide de refroidissement.

Selon une réalisation, chaque plaque cathodique ou anodique comporte un collecteur d'entrée de réactif formé au travers de la plaque et étant en communication fluidique avec le circuit de réactif, un collecteur de sortie de réactif formé au travers de la plaque et étant en communication fluidique avec le circuit de réactif, un collecteur d'entrée de fluide de refroidissement formé au travers de la plaque, un collecteur de sortie de fluide de refroidissement formé au travers de la plaque.

Selon une réalisation, la pile comporte une plaque d'obturation comprenant une deuxième face de collecte de courant électrique destinée à faire face à une deuxième plaque collectrice de courant électrique et une face d'obturation fixée à la face de refroidissement de la dernière plaque d'extrémité, la face d'obturation et la face de refroidissement de la dernière plaque d'extrémité définissant entre elles des reliefs et des creux pour former un dernier circuit de refroidissement pour la circulation du fluide de refroidissement.

Selon une réalisation, la pile comporte un deuxième joint plat interposé entre la deuxième plaque collectrice et la deuxième plaque de serrage.

Selon une réalisation, le deuxième joint plat a, au repos, une épaisseur constante sur toute sa surface.

Selon une réalisation, le deuxième joint plat est électriquement isolant.

Selon une réalisation, le deuxième joint plat a une face plane dont la surface est au moins égale à 80 % de la surface de l'une des faces de la deuxième plaque de serrage.

Selon une réalisation, le deuxième joint plat a une face plane dont la surface est au moins égale à 80 % de la surface de l'une des faces de la plaque d'obturation.

Selon une réalisation, la deuxième face de collecte de courant électrique comporte un deuxième embossage pour recevoir la deuxième plaque collectrice, de sorte que la plaque d'obturation et la deuxième plaque collectrice forment une face plane pour venir en contact avec le deuxième joint plat.

L'invention sera mieux comprise à la lecture de la description qui suit et à l'examen des figures. Ces figures ne sont données qu'à titre illustratif mais nullement limitatif de l'invention.
[Fig.1] La [Fig.1] est une représentation schématique en coupe d'une pile selon l'invention ; et
[Fig.2] la [Fig.2] est une représentation schématique en élévation de la pile de la [Fig.1].

Les éléments identiques, similaires, ou analogues, conservent la même référence d'une figure à l'autre.

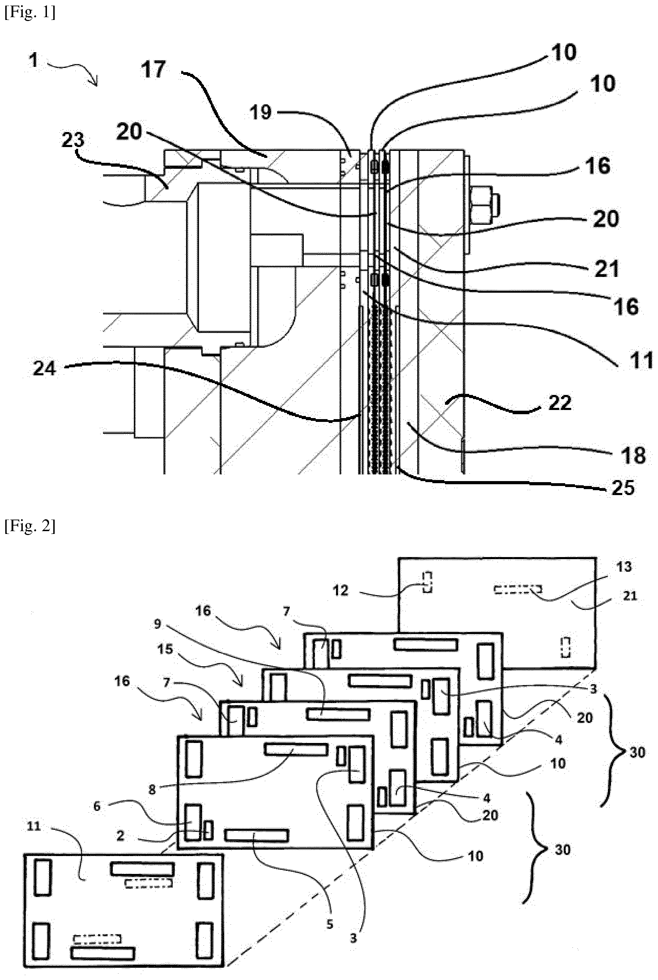

Comme visible sur la [Fig.1], une pile 1 à combustible à membrane échangeuse de protons comporte comportant un empilement d'une pluralité de cellules 30, l'empilement étant pris en sandwich entre une première plaque de serrage 17, 23 et une deuxième plaque de serrage 22, pour appliquer une pression de serrage prédéterminée sur l'empilement.

La pluralité de cellules 30 comporte une première cellule 30 à une première extrémité de l'empilement et une dernière cellule 30 à une deuxième extrémité de l'empilement.

Chaque cellule 30 de la pluralité comporte une plaque anodique 10 et une plaque cathodique 20 prenant en sandwich un Assemblage Membrane Electrodes 16, l'une des plaques 10, 20 de la première cellule 30 formant avec l'une des plaques 10, 20 d'une autre des cellules 30, un premier circuit intercellulaire de refroidissement 15, l'autre des plaques 10, 20 de la première cellule 30 définissant une première plaque d'extrémité, l'une des plaques 10, 20 de la dernière cellule 30 formant avec l'une des plaques 10, 20 d'une autre des cellules 30, un dernier circuit intercellulaire de refroidissement 15, l'autre des plaques 10, 20 de la dernière cellule 30 définissant une dernière plaque d'extrémité.

La pile 1 comporte une plaque de distribution 11 comprenant une première face de collecte de courant électrique destinée à faire face à une première plaque collectrice 24 de courant électrique et une face de distribution destinée à faire face à la face de refroidissement de la première plaque d'extrémité.

La pile 1 comporte un premier joint plat 19 interposé entre la plaque de distribution 11 et la première plaque de serrage 17, 23, la plaque de distribution 11 comportant au moins un collecteur de distribution d'un fluide formé au travers de la plaque, la première face de collecte de courant électrique et/ou la première plaque de serrage 17, 23 comportant une lèvre annulaire ménagée autour du collecteur de distribution, de sorte à pincer le premier joint plat 19 pour assurer une étanchéité vis-à-vis du fluide.

La première face de collecte de courant électrique comporte un premier embossage pour recevoir la première plaque collectrice 24, de sorte que la plaque de distribution 11 et la première plaque collectrice 24 forment ensemble une face plane pour venir en contact avec le premier joint plat 19.

Le premier joint plat 19 comporte au moins un orifice pour le passage du fluide entre la première plaque de serrage 17, 23 et la plaque de distribution 11.

La première plaque collectrice 24 comporte une languette faisant saillie par rapport au plan de la première plaque collectrice 24.

Le premier joint plat 19 comporte une fente pour le passage de la languette à travers le premier joint plat 19.

La pile comporte au moins un tirant pour appliquer la pression de serrage sur l'empilement.

Le premier joint plat 19 comporte au moins un trou traversant pour le passage du tirant.

Comme visible sur la [Fig.1], la pile 1 comporte une plaque d'obturation 21 comprenant une deuxième face de collecte de courant électrique destinée à faire face à une deuxième plaque collectrice de courant électrique 25 et une face d'obturation fixée à la face de refroidissement de la dernière plaque d'extrémité, la face d'obturation et la face de refroidissement de la dernière plaque d'extrémité définissant entre elles des reliefs et des creux pour former un dernier circuit de refroidissement pour la circulation du fluide de refroidissement.

La pile 1 comporte un deuxième joint plat 18 interposé entre la deuxième plaque collectrice 25 et la deuxième plaque de serrage 22.

La [Fig.2] représente la pile 1 en élévation, avant assemblage.

Comme visible sur la [Fig.2], chaque plaque 10, 20 comporte :
- un collecteur d'entrée de réactif 3, 4 formé au travers de la plaque 10, 20 et étant en communication fluidique avec le circuit de réactif par l'intermédiaire d'une première lumière 2 formée au travers de la plaque 10, 20 ;
- un collecteur de sortie de réactif 6, 7 formé au travers de la plaque 10, 20 et étant en communication fluidique avec le circuit de réactif par l'intermédiaire d'une deuxième lumière 2 formée au travers de la plaque 10, 20 ;
- un collecteur d'entrée de fluide de refroidissement 5 formé au travers de la plaque 10, 20 ;
- un collecteur de sortie de fluide de refroidissement 8, 9 formé au travers de la plaque 10, 20.
- au moins deux orifices formés au travers de la plaque 10, 20, chaque orifice étant agencé pour ne permettre une communication fluidique qu'au travers de la plaque 10, 20, sans être en communication fluidique avec le circuit de réactif.

Le collecteur d'entrée de réactif 3 d'une plaque anodique 10 est en communication fluidique avec un des orifices d'une plaque cathodique 20 et le collecteur de sortie de réactif 6 de la plaque anodique 10 est en communication fluidique avec un autre des orifices de la plaque cathodique 20.

Le collecteur d'entrée de réactif 3 d'une plaque cathodique 20 est en communication fluidique avec un des orifices d'une plaque anodique 10 et le collecteur de sortie de réactif 6 de la plaque cathodique 20 est en communication fluidique avec un autre des orifices de la plaque anodique 10.

Ainsi, l'empilement permet une distribution du fluide réactif dédié aux plaques anodiques 10 et une distribution du fluide réactif dédié aux plaques cathodiques 20 en formant deux circuits indépendants.

La face d'obturation de la plaque d'obturation 21 comporte un passage de réactif 12, 13 formé par des reliefs et des creux, pour permettre une communication fluidique entre le collecteur d'entrée de réactif 3, 4 et le circuit de réactif ou pour permettre une communication fluidique entre le collecteur de sortie de réactif 6, 7 et le circuit de réactif.

La face d'obturation de la plaque d'obturation 21 comporte un passage de refroidissement 13 formé par des reliefs et des creux, pour permettre une communication fluidique entre le collecteur d'entrée de fluide de refroidissement 5 et le circuit de refroidissement ou pour permettre une communication fluidique entre le collecteur de sortie de fluide de refroidissement 8, 9 et le circuit de refroidissement.

Le passage de réactif 12, 13 et le passage de refroidissement 13 peut être ménagé au niveau de la face d'obturation, au niveau de la dernière plaque d'extrémité ou encore sur les deux.

## Revendications

1. Pile (1) à combustible, comportant un empilement d'une pluralité de cellules (30), l'empilement étant pris en sandwich entre une première plaque de serrage (17, 23) et une deuxième plaque de serrage (22), pour appliquer une pression de serrage prédéterminée sur l'empilement, la pluralité de cellules (30) comportant une première cellule (30) à une première extrémité de l'empilement et une dernière cellule (30) à une deuxième extrémité de l'empilement, chaque cellule (30) de la pluralité comportant une plaque anodique (10) et une plaque cathodique (20), l'une des plaques (10, 20) de la première cellule (30) formant avec l'une des plaques (10, 20) d'une autre des cellules (30), un premier circuit intercellulaire de refroidissement (15), l'autre des plaques (10, 20) de la première cellule (30) définissant une première plaque d'extrémité, l'une des plaques (10, 20) de la dernière cellule (30) formant avec l'une des plaques (10, 20) d'une autre des cellules (30), un dernier circuit intercellulaire de refroidissement (15), l'autre des plaques (10, 20) de la dernière cellule (30) définissant une dernière plaque d'extrémité, la pile (1) comportant une plaque de distribution (11) comprenant une première face de collecte de courant électrique destinée à faire face à une première plaque collectrice (24) de courant électrique et une face de distribution destinée à faire face à la face de refroidissement de la première plaque d'extrémité, la pile (1) comportant un premier joint plat (19) interposé entre la plaque de distribution (11) et la première plaque de serrage (17, 23), la plaque de distribution (11) comportant au moins un collecteur de distribution d'un fluide formé au travers de la plaque, la première face de collecte de courant électrique et/ou la première plaque de serrage (17, 23) comportant une lèvre annulaire ménagée autour du collecteur de distribution, de sorte à pincer le premier joint plat (19) pour assurer une étanchéité vis-à-vis du fluide.

2. Pile (1) selon la revendication précédente, le premier joint (19) plat ayant, au repos, une épaisseur sensiblement constante sur toute sa surface.

3. Pile (1) selon l'une des revendications précédentes, le premier joint plat (19) ayant une face plane dont la surface est au moins égale à 80% de la surface de la face de la première plaque d'extrémité en vis-à-vis du premier joint plat (19).

4. Pile (1) selon l'une des revendications précédentes, le premier joint plat (19) étant électriquement isolant.

5. Pile (1) selon l'une des revendications précédentes, le premier joint plat (19) étant en contact avec au moins une portion de la première plaque collectrice (24) et étant en contact avec au moins une portion de la plaque de distribution (11).

6. Pile (1) selon l'une des revendications précédentes, la pile étant dépourvue de joint torique disposé de part et d'autre du premier joint plat (19), pour assurer l'étanchéité vis-à-vis du fluide.

7. Pile (1) selon l'une des revendications précédentes, la première face de collecte de courant électrique comportant un premier embossage pour recevoir la première plaque collectrice (24), de sorte que la plaque de distribution (11) et la première plaque collectrice (24) forment ensemble une face plane pour venir en contact avec le premier joint plat (19).

8. Pile (1) selon l'une des revendications précédentes, le premier joint plat (19) comportant au moins un orifice pour le passage du fluide entre la première plaque de serrage (17, 23) et la plaque de distribution (11).

9. Pile (1) selon l'une des revendications précédentes, la première plaque collectrice (24) comportant une languette faisant saillie par rapport au plan de la première plaque collectrice (24) et le premier joint plat (19) comportant une fente pour le passage de la languette à travers le premier joint plat (19).

10. Pile (1) selon l'une des revendications précédentes, la pile comportant au moins un tirant pour appliquer la pression de serrage sur l'empilement, le premier joint plat (19) comportant au moins un trou traversant pour le passage du tirant.

## Patentansprüche

1. Brennstoffzelle (1), die einen Stapel aus einer Vielzahl von Zellen (30) umfasst, wobei der Stapel zwischen einer ersten Spannplatte (17, 23) und einer zweiten Spannplatte (22) sandwichartig aufgenommen ist, um einen vorbestimmten Spanndruck auf den Stapel auszuüben, wobei die Vielzahl von Zellen (30) eine erste Zelle (30) an einem ersten Ende des Stapels und eine letzte Zelle (30) an einem zweiten Ende des Stapels umfasst, wobei jede Zelle (30) der Vielzahl eine Anodenplatte (10) und eine Kathodenplatte (20) umfasst, wobei eine der Platten (10, 20) der ersten Zelle (30) mit einer der Platten (10, 20) einer anderen der Zellen (30) einen ersten interzellulären Kühlkreislauf (15) bildet, wobei die andere der Platten (10, 20) der ersten Zelle (30) eine erste Endplatte definiert, wobei eine der Platten (10, 20) der letzten Zelle (30) mit einer der Platten (10, 20) einer anderen der Zellen (30) einen letzten interzellulären Kühlkreislauf (15) bildet, wobei die andere der Platten (10, 20) der letzten Zelle (30) eine letzte Endplatte definiert, wobei die Brennstoffzelle (1) eine Verteilungsplatte (11) umfasst, die eine erste Stromsammelfläche, die dazu bestimmt ist, einer ersten Stromsammelplatte (24) zugewandt zu sein, und eine Verteilungsfläche, die dazu bestimmt ist, der Kühlfläche der ersten Endplatte zugewandt zu sein, beinhaltet, wobei die Brennstoffzelle (1) eine erste Flachdichtung (19) umfasst, die zwischen die Verteilungsplatte (11) und die erste Spannplatte (17, 23) eingefügt ist, wobei die Verteilungsplatte (11) mindestens einen Verteilungssammler für ein Fluid umfasst, der durch die Platte gebildet ist, wobei die erste Stromsammelfläche und/oder die erste Spannplatte (17, 23) eine ringförmige Lippe umfassen, die um den Verteilungssammler herum eingerichtet ist, um die erste Flachdichtung (19) einzuklemmen und so eine Dichtheit gegenüber dem Fluid zu gewährleisten.

2. Brennstoffzelle (1) nach dem vorhergehenden Anspruch, wobei die erste Flachdichtung (19) im Ruhezustand eine über ihre gesamte Oberfläche im Wesentlichen konstante Dicke aufweist.

3. Brennstoffzelle (1) nach einem der vorhergehenden Ansprüche, wobei die erste Flachdichtung (19) eine ebene Fläche aufweist, deren Oberfläche mindestens 80 % der Oberfläche der Fläche der ersten Endplatte gegenüber der ersten Flachdichtung (19) beträgt.

4. Brennstoffzelle (1) nach einem der vorhergehenden Ansprüche, wobei die erste Flachdichtung (19) elektrisch isolierend ist.

5. Brennstoffzelle (1) nach einem der vorhergehenden Ansprüche, wobei die erste Flachdichtung (19) mit mindestens einem Abschnitt der ersten Sammelplatte (24) in Kontakt steht und mit mindestens einem Abschnitt der Verteilungsplatte (11) in Kontakt steht.

6. Brennstoffzelle (1) nach einem der vorhergehenden Ansprüche, wobei die Brennstoffzelle nicht über einen O-Ring verfügt, der zu beiden Seiten der ersten Flachdichtung (19) angeordnet ist, um die Dichtheit gegenüber dem Fluid zu gewährleisten.

7. Brennstoffzelle (1) nach einem der vorhergehenden Ansprüche, wobei die erste Stromsammelfläche eine erste Prägung zur Aufnahme der ersten Sammelplatte (24) umfasst, sodass die Verteilungsplatte (11) und die erste Sammelplatte (24) zusammen eine ebene Fläche bilden, um mit der ersten Flachdichtung (19) in Kontakt zu kommen.

8. Brennstoffzelle (1) nach einem der vorhergehenden Ansprüche, wobei die erste Flachdichtung (19) mindestens eine Öffnung für den Durchgang des Fluids zwischen der ersten Spannplatte (17, 23) und der Verteilungsplatte (11) umfasst.

9. Brennstoffzelle (1) nach einem der vorhergehenden Ansprüche, wobei die erste Sammelplatte (24) eine Zunge umfasst, die in Bezug auf die Ebene der ersten Sammelplatte (24) vorsteht, und die erste Flachdichtung (19) einen Schlitz für den Durchgang der Zunge durch die erste Flachdichtung (19) umfasst.

10. Brennstoffzelle (1) nach einem der vorhergehenden Ansprüche, wobei die Brennstoffzelle mindestens einen Zuganker umfasst, um den Spanndruck auf den Stapel auszuüben, wobei die erste Flachdichtung (19) mindestens eine Durchgangsbohrung für den Durchgang des Zugankers umfasst.

## Claims

1. Fuel cell (1) having a stack of a plurality of cells (30), the stack being sandwiched between a first clamping plate (17, 23) and a second clamping plate (22) to apply a predetermined clamping pressure to the stack, the plurality of cells (30) having a first cell (30) at a first end of the stack and a last cell (30) at a second end of the stack, each cell (30) of the plurality having an anode plate (10) and a cathode plate (20), one of the plates (10, 20) of the first cell (30) forming, with one of the plates (10, 20) of another of the cells (30), a first inter-cell cooling circuit (15), the other of the plates (10, 20) of the first cell (30) defining a first end plate, one of the plates (10, 20) of the last cell (30) forming, with one of the plates (10, 20) of another of the cells (30), a last inter-cell cooling circuit (15), the other of the plates (10, 20) of the last cell (30) defining a last end plate, the fuel cell (1) having a distribution plate (11) comprising a first electric current collection face intended to face a first electric current collection plate (24) and a distribution face intended to face the cooling face of the first end plate, the fuel cell (1) having a first flat seal (19) interposed between the distribution plate (11) and the first clamping plate (17, 23), the distribution plate (11) having at least one fluid distribution manifold formed through the plate, the first electric current collection face and/or the first clamping plate (17, 23) having an annular lip formed about the distribution manifold so as to clamp the first flat seal (19) to provide a fluidtight seal.

2. Fuel cell (1) according to the preceding claim, the first flat seal (19) having, when unstressed, a substantially constant thickness over the entire surface thereof.

3. Fuel cell (1) according to one of the preceding claims, the first flat seal (19) having a flat face, the surface of which is at least equal to 80% of the surface of the face of the first end plate facing the first flat seal (19).

4. Fuel cell (1) according to one of the preceding claims, the first flat seal (19) being electrically insulating.

5. Fuel cell (1) according to one of the preceding claims, the first flat seal (19) being in contact with at least a portion of the first collection plate (24) and being in contact with at least a portion of the distribution plate (11).

6. Fuel cell (1) according to one of the preceding claims, the fuel cell not having an O-ring arranged on either side of the first flat seal (19) to provide a fluidtight seal.

7. Fuel cell (1) according to one of the preceding claims, the first electric current collection face having a first boss for receiving the first collection plate (24), such that the distribution plate (11) and the first collection plate (24) together form a flat face to come into contact with the first flat seal (19).

8. Fuel cell (1) according to one of the preceding claims, the first flat seal (19) having at least one orifice to enable the fluid to pass between the first clamping plate (17, 23) and the distribution plate (11).

9. Fuel cell (1) according to one of the preceding claims, the first collection plate (24) having a tongue projecting from the plane of the first collection plate (24) and the first flat seal (19) having a slot enabling the tongue to pass through the first flat seal (19).

10. Fuel cell (1) according to one of the preceding claims, the fuel cell having at least one tie rod for applying the clamping pressure to the stack, the first flat seal (19) having at least one through-hole for passage of the tie rod.
